Europäisches Patentamt

European Patent Office

Office européen des brevets

(19)

(11) Numéro de publication: **0 184 521 B1**

(12) **FASCICULE DE BREVET EUROPEEN**

(45) Date de publication du fascicule du brevet: **23.05.90**

(51) Int. Cl.⁵: **G 01 M 3/22, F 22 B 37/42**

(21) Numéro de dépôt: **85402429.6**

(22) Date de dépôt: **06.12.85**

(54) **Procédé et dispositif de détection des fuites dans un échangeur de chaleur en fonctionnement.**

(30) Priorité: **06.12.84 FR 8418644**

(43) Date de publication de la demande:
**11.06.86 Bulletin 86/24**

(45) Mention de la délivrance du brevet:
**23.05.90 Bulletin 90/21**

(84) Etats contractants désignés:
**BE CH DE GB IT LI**

(56) Documents cités:
**DE-A-2 815 367**
**US-A-3 425 264**
**US-A-3 522 008**
**US-A-3 975 943**
**US-A-4 226 113**
**US-A-4 328 700**

**MACHINE DESIGN, vol. 46, no. 2, janvier 1974,
page 44, Cleveland, Ohio, US; "Leak detector
comes in out of the cold"**

(73) Titulaire: **ELECTRICITE DE FRANCE Service
National
2, rue Louis Murat
F-75008 Paris (FR)**

(72) Inventeur: **Germain, Jean-Luc
103, rue des Landes
F-78400 Chatou (FR)**
Inventeur: **Janneteau, Eric
11, rue du Chateau
F-92500 Rueil Malmaison (FR)**
Inventeur: **Loisy, François
30, rue Baudin
F-92400 Courbevoie (FR)**
Inventeur: **Honore, Joel
83, rue Myrha
F-75018 Paris (FR)**

(74) Mandataire: **Fort, Jacques et al
CABINET PLASSERAUD 84, rue d'Amsterdam
F-75009 Paris (FR)**

Courier Press, Leamington Spa, England.

**Description**

L'invention concerne la détection et l'évaluation de l'importance des fuites dans un échangeur de chaleur entre deux fluides principalement sous forme gazeuse, à l'aide d'un gaz traceur qui sera en général l'hélium, alors que l'échangeur est en fonctionnement. Une application particulièrement importante de l'invention est constituée par la détection de fuites dans un échangeur de chaleur destiné à surchauffer la vapeur entre deux corps de turbine d'une centrale thermique.

On connaît déjà de nombreux procédés de détection de fuites dans les échangeurs de chaleur. Beaucoup utilisent le contrôle par dilution d'un traceur, qui peut être l'hélium. Cette solution présente des inconvénients. Elle exige la connaissance précise des débits mis en jeu et elle est gênée par la recirculation des fluides.

Le document DE—A—2815 367 fait connaître un procédé selon le préambule de la revendication 1. Suivant ce procédé connu, le gaz traceur, apparamment injecté de façon continue est détecté au niveau de condenseur. Cette solution a des inconvénients. Etant donné que les ciels des ballons de purge sont, dans une centrale, envoyés au condenseur, les transferts troubleraient la mesure s'il n'était pas prévu une vanne à deux voies (16) permettant de couper temporairement l'admission de vapeur de purge au condenseur. Cette nécessité complique l'intallation et trouble le fonctionnement normal de l'ensemble de l'installation pendant les périodes de mesure. Par ailleurs le volume du condenseur crée une constante de temps très élevée (plusieurs minutes) qui ralentit la cadence des mesures.

On connait également (US—A—4328700) un procédé de détection de fuites dans un environnement complètement différent de celui suivant l'invention: le document concerne la détection de fuites entre écoulements dans un appareillage de traitement d'un fluide qui est en fait un hydrocarbure; il enseigne l'utilisation classique de SF6 comme traceur et propose de mesurer le temps écoulé entre l'injection du SF6 dans les gaz relativement froid en amont de l'échangeur, d'un four et d'un réacteur de conversion et son apparition éventuelle dans les gaz chauds provenant du réacteur et ayant traversé l'échangeur. Du fait que le même courant gazeux traverse toute l'installation, SF6 apparaîtra à la sortie, ce qui rend la mesure de temps indispensable, et le problème de la détection se pose de façon totalement différente du fait de l'existence d'une seule phase et de l'impossibilité de concentrer le traceur par condensation (l'hélium restant dans les incondensables du fait de sa faible solubilité dans l'eau, dans le cas de l'invention).

Le document US—A—4226113 décrit un procédé dans lequel on injecte de l'hélium aux extrémités avant de plusieurs tubes de refroidissement d'un échangeur, puis on chasse l'hélium le long des tubes à l'aide d'un gaz propulseur.

Le procédé de document US—A—3 975 943 utilise le fluide de fonctionnement d'un échangeur eau-métal alcalin comme traceur: le tube fuyard est décelé par l'absence de transfert d'hydrogène à travers la fuite lorsque ce tube est balayé par du gaz inerte.

Le procédé du document US—A—3 522 008 n'a comme caractéristique commune avec l'invention que le fait d'utiliser un traceur dont la présence est décelée à la sortie d'un échangeur, sur le trajet d'un fluide où il n'a pas été introduit délibérément.

L'article "Leak detector comes in out of the cold" (Machine design, vol. 46, n°2, Janvier 1974, page 44) mentionne l'utilisation d'un spectromètre de masse portable pour détecter les fuites d'un réservoir en le mettant sous vide dans une ambiance d'hélium.

Enfin le document US—A—3 425 264 enseinge encore l'utilisation d'hélium pour détecter les fuites d'un échangeur.

L'invention vise à fournir un procédé et un dispositif de détection de fuites dans un échangeur, permettant de déceler rapidement l'apparition d'une fuite et de suivre son évolution, en ne mettant en oeuvre que des moyens simples et des éléments adaptables à plusieurs types d'échangeur.

Dans ce but, l'invention propose un procédé de détection suivant la partie caractérisante de la revendication 1.

Pour permettre une évaluation de l'importance de la fuite, on intègrera généralement dans le temps un signal représentatif de la teneur du fluide à basse pression en hélium, après chaque injection. Cette opération pourra être effectuée par une chaîne de mesure opérant avantageusement par spectrométrie de masse. Pour permettre l'évaluation ou quantification de la fuite, il faut calibrer la chaîne de détection. On peut le faire en realisant le même type d'injection que pour la détection, mais cette fois dans le fluide à basse pression en amont du prélèvement.

Grâce au caractère "impulsionnel" de l'injection, on peut se dispenser d'un dispositif coûteux de prémélange à concentration connue et on évite les accumulations et recirculations éventuelles de l'hélium constituant le gaz traceur.

Dans l'application de l'invention à la détection des fuites dans un échangeur de resurchauffe de vapeur, on condense une fraction de la vapeur surchauffée à la sortie de l'échangeur, en dégaze l'eau de condensation et on recherche la présence de gaz traceur dans les incondensables.

L'invention propose également un dispositif de détection et d'évaluation des fuites dans un échangeur de chaleur alors que ce dernier est en fonctionnement, conforme à la revendication 6.

Les moyens de mesure comportent avantageusement un spectromètre de masse associé à un système de prélèvement à débit fixe ou "renifleur" aspirant une partie des incondensables après condensation du fluide dans le cas où celui-ci est de la vapeur.

L'ensemble du dispositif peut être commandé par un automate programmable. Celui-ci provoque l'exécution des séquences successives de mesure, détermine les quantités en jeu à partir des informations provenant de capteurs de pression de moyens détecteurs. L'ensemble du dispositif peut être regroupé sur un véhicule de façon à être transporté d'un échangeur à un autre. Dans ce cas, il suffira que les échangeurs soient munis de raccords destinés à recevoir des conduits souples appartenant au dispositif.

L'invention sera mieux comprise à la lecture de la description qui suit d'un mode particulier d'exécution, donné à titre d'exemple non limitatif. La description se réfère aux dessins qui l'accompagnent, dans lesquels:

—la figure 1 est un schéma de principe d'un dispositif suivant l'invention, destiné à détecter les fuites éventuelles d'un échangeur de chaleur constituant surchauffeur de vapeur, et à évaluer l'importance des fuites éventuelles; et

—la figure 2 est un schéma de principe de moyens d'injection de quantités connues d'hélium dans les circuits haute pression et basse pression de l'échangeur.

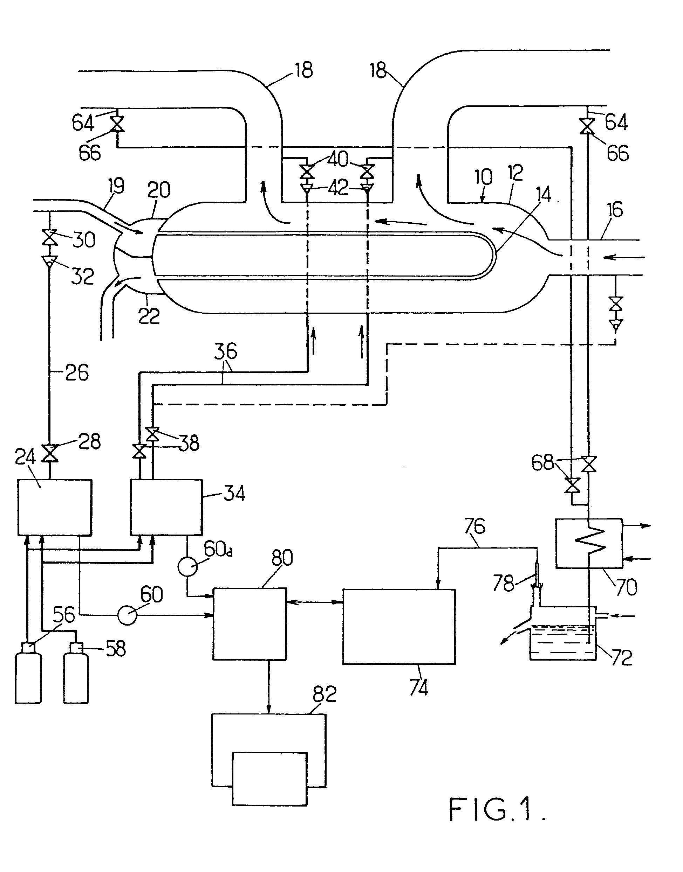

Le mode d'exécution de l'invention qui sera décrit est notamment utilisable pour détecter les fuites dans un échangeur de chaleur 10 du type montré en figure 1, comprenant une enveloppe 12 occupée par le fluide à basse pression (vapeur à surchauffer). Le circuit de fluide à haute pression (vapeur de surchauffe) comporte un faisceau de tubes en U14 en contact avec le fluide à basse pression. Ce dernier, constitué par de la vapeur saturée, pénètre dans l'enveloppe par une entrée 16. Il en sort par une sortie ou plusieurs. Dans le cas illustré deux sorties 18 ont été indiquées.

Le circuit de vapeur de surchauffe comporte, de son côté une conduite d'entrée 19, une boîte 20 formant distributeur, le faisceau de tubes 14 et une boîte de sortie 22.

La pression dans le faisceau 14, 55 bars par exemple, est très supérieure à celle qui règne dans l'enveloppe 12, de sorte que les fuites éventuelles auront lieu de la vapeur de surchauffe vers la vapeur à surchauffer.

Le dispositif de détection de fuites suivant l'invention peut être regardé comme comprenant des moyens de stockage temporaire d'une quantité déterminée d'hélium, des moyens de chasse rapide de cette quantité d'hélium dans l'entrée de vapeur de surchauffe, des moyens de prélèvement et de conditionnement de la vapeur à analyser et des moyens de mesure et d'aide au diagnostic. Ces différents moyens seront successivement décrits.

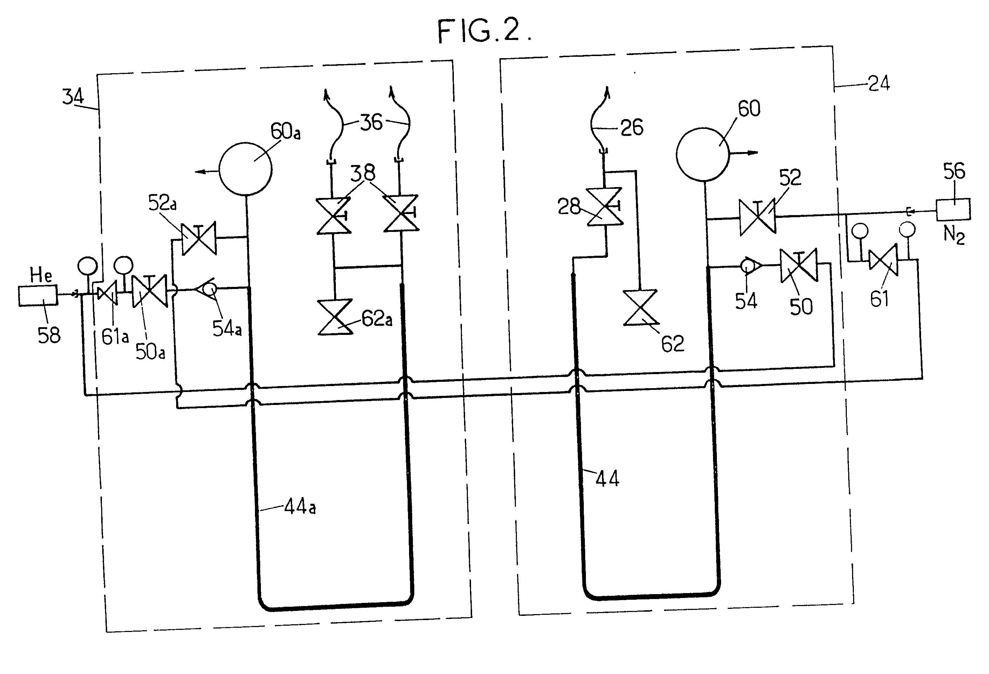

Les moyens de stockage temporaire et d'injection 24 peuvent avoir la constitution montrée en figure 2. Ces moyens permettent d'injecter une quantité d'hélium dont le volume et la pression sont connus dans la conduite 19, par chasse à l'aide d'un gaz inerte qui sera généralement l'azote.

L'injection doit s'effectuer rapidement. Dans la pratique, le "bouchon" d'hélium et la quantité de gaz vecteur inerte qui le pousse doivent passer dans la conduite d'entrée 19 en un temps inférieur à 10 secondes, qui sera en général compris entre 3 et 10 secondes. Le volume d'hélium injecté dépend du seuil de détection que l'on se fixe. Dans la pratique en sera généralement conduit à injecter une quantité d'hélium correspondant à un volume de 10 litres dans les conditions normales de température et de pression.

Les moyens 24 peuvent constituer un ensemble relié à la conduite 18 part une tuyauterie en acier inoxydable 26, ayant un diamètre intérieur suffisant pour réduire les pertes de charge (6 à 10 mm en général). La tuyauterie est équipée à ses extrémités de vannes d'isolement 28 et 30. Elle comportera également en général un clapet anti-retour 32 pour limiter le retour de vapeur vers les moyens de stockage et d'injection.

On peut utiliser les mêmes moyens de stockage et d'injection pour effectuer également un calibrage. Mais cette solution présente des inconvénients. En effet, il est préférable d'effectuer la calibrage en injectant un volume d'hélium plus faible que pour la mesure (0,5 Nl au lieu de 10 Nl par exemple). De plus l'injection se fait sous pression plus faible. Une solution avantageuse, montrée en figures 1 et 2, consiste à prévoir des moyens de calibrage 34 séparés, de constitution similaire à celle des moyens d'injection, reliés au circuit de fluide à basse pression (vapeur à surchauffer). Dans le cas illustré en figure 1, où il y a plusieurs sorties de vapeur surchauffée, les moyens de calibrage 34 sont reliés à chacune des sorties 18 par une tuyauterie 36 munie, comme la tuyauterie 26, de vannes d'isolement 38 et 40 et d'un clapet anti-retour 42.

Lorsque le dispositif doit être déplaçable, les tuyauteries 26 et 36 sont prévues pour être reliées à l'échangeur non pas directement, mais par l'intermédiaire de flexibles capables de supporter les pressions d'injection requises.

Les moyens de stockage temporaire et d'injection 24 montrés en figure 2 comprennent un volume calibré, formé par exemple par un simple tuyau coudé 44 muni à ses extrémités de vannes à manoeuvre rapide, à commande pneumatique ou électromagnétique. Le volume 44 de la Figure 2 est muni d'une vanne aval 28 et de vannes amont 50 d'amenée d'hélium et 52 d'amenée d'azote. Un clapet anti-retour 54 évite les reflux vers les moyens d'injection. Les alimentations en gaz peuvent être constituées par des bouteilles d'azote et d'hélium munies de manodétendeurs respectifs 56 et 58 réduisant la pression à une valeur qui est par exemple de 65 bars lorsque la pression de la vapeur de surchauffe est de 55 bars. De façon générale, la pression fournie par les manodétendeurs doit être égale à celle de la valeur de surchauffe augmentée des pertes de charge qui interviennent lors de l'injection. Le volume calibré 44 est muni d'un manomètre 60 fournissant un signal représentatif de la pression qui y règne. La pression d'alimentation en azote sera avantageusement choisie légèrement supérieure à celle de l'hélium pour éviter tout mélange incontrôlé né de gaz. Enfin, le volume 44 est muni d'une vanne de purge 62.

Les moyens de calibrage 34 montrés en Figure 2 comportent des éléments correspondant à ceux des moyens de stockage et d'injection. Ils sont pour cette raison désignés par le même numéro de référence affecté de l'indice a. Le volume 44a sera généralement de l'ordre du dizième du volume 44, par exemple 100 cm³ au lieu de 1 litre. Les tuyauteries sont en tous les cas prévus pour permettre une injection de type impulsionnel, ce qui exige en général un débit d'environ 30 Nl/s. Les sources d'hélium et d'azote peuvent être communes aux moyens 24 et 34. Des vannes de coupure 61 sont alors prévues pour isoler les moyens 24 ou 34.

Les moyens de prélèvement (figure 1) comprennent un piquage 64, muni d'une vanne de coupure 66, sur chacune des sorties 18. Les piquages 64 doivent être à une distance de l'enveloppe 10 et des points d'injection des moyens de calibrage suffisante pour qu'il y ait une homogénéisation. Dans la pratique, une distance d'au moins 10 fois le diamètre de la tuyauterie est suffisante. Les piquages sont reliés, par l'intermédiaire de vannes respectives de réglage de débit 68, aux moyens de conditionnement qui comportent un réfrigérant 70 et un dégazeur 72 dans le cas d'application à un surchauffeur de vapeur. Les piquages 64 sont prévus pour fournir un débit garantissant la sensibilité requise. Dans la pratique, un débit compris entre 0,5 et 1 kg/mn sera généralement satisfaisant. Il correspond à 0,5 l/s environ de vapeur.

Les produits sortant du réfrigérant 70 comportent, dans le cas de l'application à un surchauffeur, de l'eau et des incondensables. L'ensemble de ces produits parvient au dégazeur 72. Les gaz incondensables sont aspirés hors du condenseur et envoyés à un détecteur 74. Ce détecteur peut notamment être un spectromètre de masse, relié au dégazeur par une conduit 76 et un "renifleur" 78 formé par une pastille de matériau très dur, tel que du rubis synthétique, percée d'un orifice de faible diamètre, par exemple d'environ 50 µ. Un filtre est avantageusement prévu en amont de la pastille pour éviter l'obturation de l'orifice par des poussières. Le spectromètre de masse sera calé sur une raie du gaz traceur, généralement l'hélium.

La séquence des opérations est avantageusement commandée par un automate programmable 80 muni d'un microprocesseur qui, à partir des signaux reçus du détecteur et des manomètres, détermine la concentration d'hélium et en déduit l'importance de la fuite. L'automate 80 peut être associé à un enregistreur 82.

La sensibilité de détection peut être déterminée en faisant le rapport de la quantité d'hélium reçue, déterminée par intégration, sur la quantité d'hélium injectée en 18 lors du calibrage. Le quotient de fuite est déterminé en faisant le rapport entre la quantité d'hélium reçue, déterminée par intégration, sur la quantité d'hélium injectée dans le circuit haute pression. Le rapport entre quotient de fuite et sensibilité de détection donne la fraction de gaz s'échappant par la fuite. On a constaté qu'on peut déceler des fuites représentant une fraction du débit de gaz introduit dans le circuit haute pression aussi faible que 0,1 %.

L'automate à microprocesseur peut être prévu pour changer automatiquement le calibre du détecteur 74 en fonction de la concentration mesurée, afin d'augmenter la dynamique de mesure qui peut aller de 0,2 vpm à 1% d'hélium environ dans un exemple représentatif.

Le dispositif est susceptible de nombreuses variantes de réalisation. Par exemple l'injection de calibrage peut s'effectuer en amont de l'enveloppe 12, sur le circuit basse pression, comme cela est représenté en tirets sur la Figure 1.

Le procédé suivant l'invention peut être mis en oeuvre de la façon suivante, à l'aide du dispositif qui vient d'être décrit.

On raccorde tout d'abord les moyens de prélèvement et de conditionnement à l'aide d'au moins un piquage 64. Les conduites doivent avoir un diamètre suffisant pour que le débit de prélèvement fournisse un débit de gaz garantissant la sensibilité requise (entre 0,5 et 1 kg/mn pour les dégazeurs courants). La température en aval du réfrigérant doit être inférieure à celle de l'air ambiant, pour éviter toute condensation supplémentaire en amont du dégazeur 72. On raccorde les tuyauteries d'injection 26 et 36.

Une fois ces liaisons réalisées, on peut effectuer le calibrage par injection d'hélium dans le circuit basse pression, de l'ordre de 12 bars un général.

L'opération d'injection comportera généralement trois phases, dans le cas d'un surchauffeur, pour pallier le risque de présence d'eau dans les tuyauteries 36 en aval des vannes 38, il est préférable de purger ces tuyauteries en poussant l'eau éventuelle avec de l'azote sous pression. Pour cela on règle la pression d'azote à sa valeur nominale (pression de vapeur plus perte de charge, soit par exemple 16 bars), que l'on peut vérifier sur le manomètre 60a. Les vannes 61a et 52a sont ouvertes. Puis les vannes 38 sont progressivement ouvertes pour permettre à l'azote de refouler l'eau. Lorsqu'on ferme alors la vanne 50a on lit sur le manomètre 60a une pression égale à la pression de vapeur si la tuyauterie est bien libre d'eau. On peut alors isoler le volume calibré 44a en fermant la vanne 38.

L'hélium doit alors être admis au volume 44a. On peut envisager deux façons de procéder:

—soit en admettant de l'hélium pour passer la pression initiale de 12 bars à une pression proche de celle de l'azote, par exemple 15 bars. La quantité d'hélium alors stockée temporairement dans le volume 44a sera égale à la différence de pression multipliée par le volume;

—soit en purgeant le volume 44a à l'aide de la vanne 62a puis en gonflant ce volume avec de l'hélium jusqu'à ce qu'on soit passé de la pression atmosphérique à la pression requise.

L'injection proprement dite s'effectue en ouvrant la vanne d'alimentation en azote 52a, puis la vanne d'injection 38, l'une et l'autre de façon brusque. L'azote pousse alors l'hélium hors de la tuyauterie 36. Le temps d'injection multiplié par le débit doit être de trois à cinq fois le volume, de façon à balayer entièrement l'hélium.

On isole ensuite le volume calibré 44a en fermant successivement les vannes 52a, puis 38.

Dans la pratique, l'ensemble du nuage d'hélium provenant d'une fuite éventuelle est détectée en moins d'une minute et le temps de récupération du signal est inférieur à cinq minutes. La durée totale du calibrage, purge de l'eau comprise, est inférieure à 10 minutes.

Enfin, on termine le calibrage en faisant tomber la pression par ouverture de la vanne de purge 62a.

Chaque mesure proprement dite correspond à une injection d'hélium dans le circuit haute pression. Le mode opératoire est le même que celui qui vient d'être décrit, si ce n'est que la pression d'hélium est plus élevée et que la quantité est plus importante pour avoir une sensibilité suffisante. Si par exemple la pression de vapeur de surchauffe est de 55 bars, la pression d'azote pourra être de 66 bars et la pression d'hélium 65 bars.

L'automate pourra être programmé de façon à répéter périodiquement des séquences de détection de fuite et, en cas de présence d'hélium pour augmenter la cadence des mesures. Le dispositif peut également être placé en totalité sur un véhicule et autoriser des contrôles périodiques ou, lorsqu'une fuite a été décelée, une surveillance de son évolution.

**Revendications**

1. Procédé de détection de fuites dans un échangeur de chaleur (10) entre deux courants de vapeur à des pressions différentes principalement sous forme gazeuse, alors que l'échangeur (10) est en fonctionnement, procédé utilisant l'injection d'un gaz traceur tel que l'hélium dans la vapeur à haute pression à l'entrée (19) de vapeur à haute pression de l'échangeur (10) et la détermination de la présence éventuelle de gaz traceur dans la vapeur à basse pression en aval de l'échangeur (10), caractérisé en ce qu'on injecte en un temps bref, compris entre 3 et 10 secondes, une quantité prédéterminée du gaz traceur préalablement stockée dans un volume calibré (24) sous une pression déterminée, supérieure à la pression de la vapeur à haute pression, dans la conduite d'entrée du circuit (20, 14, 22) de la vapeur à haute pression, et on recherche la présence du gaz traceur dans la vapeur directement à la sortie de l'échangeur (10) une fois ladite injection effectuée, et en ce qu'on répète la séquence de stockage, d'injection et de détermination de présence éventuelle de gaz traceur.

2. Procédé selon la revendication 1 de détection de fuites dans un échangeur (10) de surchauffe de vapeur, caractérisé en ce qu'on condense une fraction de la vapeur surchauffée dès la sortie de l'échangeur (10), on dégaze l'eau de condensation et on recherche la présence éventuelle de gaz traceur dans les incondensables.

3. Procédé selon la revendication 1 ou 2, caractérisé en ce qu'on intègre dans le temps un signal représentatif de la teneur en gaz traceur de la vapeur à basse pression prélevée à la sortie (18) de l'échangeur (10), après chaque injection.

4. Procédé selon la revendication 1, 2 ou 3, caractérisé en ce qu'on effectue un calibrage préalable, permettant de déterminer l'importance des fuites, par injection d'une quantité prédéterminée (34) du gaz traceur dans la vapeur à basse pression et détermination de la quantité gaz traceur recueillie à la sortie (18) de l'échangeur (10) après l'injection.

5. Procédé selon l'une quelconque des revendications précédentes, caractérisé en ce que le gaz traceur est propulsé vers l'échangeur (10) par un gaz vecteur inerte en une durée inférieure à 10 secondes.

6. Dispositif de détection de fuites dans un échangeur (10) de chaleur entre deux courants de vapeur à des pressions différentes, alors que l'échangeur (10) est en fonctionnement, pour la mise en oeuvre du procédé selon la revendication 1 comprenant des moyens pour l'injection du gaz traceur dans l'entrée (19) de vapeur à haute pression de l'échangeur (10) et des moyens (64, 70, 72) de prélèvement d'une fraction de la vapeur à basse pression en aval (18) de l'échangeur (10) et de conditionnement de la vapeur pour en extraire le gaz traceur éventuel, et détecter sa présence, caractérisé en ce que les moyens pour l'injection du gaz traceur comprennent des moyens (44) de stockage temporaire d'une quantité prédéterminée du gaz traceur et des moyens (52) de chasse rapide de ladite quantité prédéterminée du gaz traceur dans ladite entrée (19) de vapeur à haute pression de l'échangeur (10) à l'aide d'un gaz vecteur, en ce que les moyens (64, 70, 72) de prélèvement d'une fraction de la vapeur à basse pression en aval (18) de l'échangeur (10) sont placés dès la sortie (18) de l'échangeur (10), et en ce que la détection de fuites est effectuée par des moyens (74) pour mesurer la quantité de gaz traceur recueillie.

7. Dispositif selon la revendication 6, caractérisé en ce que les moyens (74) pour mesurer la quantité de gaz traceur recueillie comprennent un spectromètre de masse (74) associé à un système de prélèvement à débit fixe (78).

8. Dispositif selon la revendication 7 de détection des fuites dans un échangeur (10) de surchauffe de vapeur, caractérisé en ce que le système de prélèvement à débit fixe (78) est prévu pour aspirer une partie des incondensables après condensations de la vapeur.

9. Dispositif selon la revendication 6, 7 ou 8, caractérisé en ce qu'il comporte un ensemble de calibrage ayant des moyens (44a) de stockage temporaire d'une quantité déterminée du gaz traceur, inférieure à la quantité prédéterminée du gaz traceur injectée pour la mesure, et des moyens (52a, 38) de chasse rapide de ladite quantité déterminée du gaz traceur dans la vapeur à basse pression dans l'échangeur (10).

10. Dispositif selon l'une quelconque des revendications 6 à 9, caractérisé en ce que les moyens qui le constituent et les alimentations (56, 58) en gaz traceur et en gaz vecteur sont portés par un véhicule et sont munis de moyens (36) démontables de raccordement avec l'échangeur (10) à vérifier.

**Patentansprüche**

1. Verfahren zum Feststellen von Lecks in einem Wärmetauscher (10) zwischen zwei hauptsächlich gasförmigen Dampfströmen unterschiedlichen Drucks während des Betriebs des Wärmetauschers (10), wobei ein Spurengas wie Helium in den unter hohem Druck stehenden Dampf am Eingang (19) des unter hohem Druck stehenden Dampf des Wärmetauschers (10) eingegeben wird und stromabwärts am Wärmetauscher (10) das eventuelle Vorhandensein dieses Spurengases in dem unter niederem Druck stehenden Dampf bestimmt wird, dadurch gekennzeichnet, daß in einem kurzen Zeitraum von 3 bis 10 Sekunden eine vorbestimmte Menge des Spurengases, das vorher unter einem kalibrierten Volumen (24) unter einem bestimmtem Druck, der höher ist als der des Hochdruckdampfes, gelagert war, in die Eingangszuleitung des Kreislaufs (20, 14, 22) des Hochdruckdampfes eingegeben wird, und daß direkt am Ausgang des Wärmetauschers (10) das Vorhandensein des Spurengases im Dampf überprüft wird, sobald es eingegeben ist, und daß die Folge des Lagerns, des Eingebens und des Bestimmens des eventuellen Vorhandenseins des Spurengases wiederholt wird.

2. Verfahren zum Festellen von Lecks in einem Wärmetauscher (10) mit überhitztem Dampf nach Anspruch 1, dadurch gekennzeichnet, daß ein Teil des überhitzten Dampfes am Ausgang des Wärmetauschers (10) kondensiert wird, daß das Kondenswasser entgast wird und daß das eventuelle Vorhandensein des Spurengases in den nicht kondensierbaren Stoffen nachgewiesen wird.

3. Verfahren nach Anspruch 1 oder 2, dadurch gekennzeichnet, daß man über de Zeit ein Signal integriert, das den Gehalt des Spurengases im Niederdruckdampf wiedergibt, den man am Ausgang (18) des Wärmetauschers (10) nach jeder Eingabe entnimmt.

4. Verfahren nach Anspruch 1, 2 oder 3, dadurch gekennzeichnet, daß vorher eine Eichung durchgeführt wird, die es erlaubt, die Größe des Lecks zu bestimmen, durch Eingeben einer vorbestimmten Menge (34) des Spurengases in den unter niedrigem Druck stehenden Dampf und durch Bestimmen der Menge des am Ausgang (18) des Wärmetauschers (10) gesammelten Spurengases nach Eingabe.

5. Verfahren nach einem der vorhergehenden Ansprüche, dadurch gekennzeichnet, daß das Spurengas vorangetrieben wird zum Wärmetauscher (10) durch ein inertes Vektorgas in einem Zeitraum von unter 10 Sekunden.

6. Vorrichtung zum Festellen von Lecks in einem Wärmetauscher (10) zwischen zwei Dampfströmen unterschiedlichen Drucks während des Betriebs des Wärmetauschers (10), um das Verfahren nach Anspruch 1 in Gang zu setzen, mit Mitteln, um das Spurengas am Eingang (19) des Wärmetauschers (10) in den unter Hochdruck stehenden Dampf einzugeben, und Mitteln (64, 70, 72) zur Entnahme eines Teils des unter niederem Druck stehenden Dampfes stromabwärts (18) vom Wärmetauscher (10) und zur Konditionierung des Dampfes, um eventuell vorhandenes Spurengas zu extrahieren und sein Vorhandensein festzustellen, dadurch gekennzeichnet, daß die Mittel zur Eingabe des Spurengases Mittel (44) zur vorläufigen Lagerung einer vorbestimmten Menge des Spurengases und Mittel (52) zum schnellen Eingben der vorbestimmten Menge des Spurengases im Eingang (19) des Hochdruckdampfes des Wärmetauschers (10) mit Hilfe eines Vektorgases, wobei die Mittel (64, 70, 72) zur Entnahme eines Teils des Niederdruckdampfes stromabwärts (18) des Wärmetauschers (10) am Ausgang (18) des Wärmetauschers (10) angeordnet sind, und wobei das Feststellen der Lecks durch Mittel (74) zum Messen der Menge des gesammelten Spurengases ausgeführt wird.

7. Vorrichtung nach Anspruch 6, dadurch gekennzeichnet, daß die Mittel (74) zum Messen der Menge des gesammelten Spurengases ein Massenspektrometer (74) beinhalten, das mit einem Entnahmesystem mit festem Durchsatz (78) verbunden ist.

8. Vorrichtung zum Feststellen von Lecks in einem Wärmetauscher (10) mit überhitztem Dampf nach Anspruch 7, dadurch gekennzeichnet, daß das Entnahmesystem mit festem Durchsatz (78) vorgesehen ist, um einen Teil der nichtkondensierbaren Stoffe nach Kondensierung des Dampfes anzusaugen.

9. Vorrichtung nach den Ansprüchen 6, 7 oder 8, dadurch gekennzeichnet, daß sie einen Eichaufbau umfaßt mit Mitteln (44a) zur vorläufigen Lagerung einer vorbestimmten Menge des Spurengases, die kleiner ist als die vorbestimmte Menge des zur Messung eingegebenen Spurengases und Mitteln (52a, 38) zum schnellen Eingeben der vorbestimmten Menge des Spurengases im Niederdruckdampf im Wärmetauscher (10).

10. Vorrichtung nach einem der Ansprüche 6 bis 9, dadurch gekennzeichnet, daß die sie bildenden Mittel und die Zuführungen (56, 58) von Spurengas und Vektorgas von einem Fahrzeug getragen sind und versehen sind mit demontierbaren Mitteln (36) zum Verbinden mit dem zu überprüfenden Wärmetauscher (10).

**Claims**

1. A process for detecting leaks in a heat exchanger (10) between two steam flows at different pressures, mainly in gaseous phase, while the exchanger (10) is in operation, said process using injection of a tracer gas such as helium into the high pressure steam at the high pressure steam inlet (19) of the exchanger (10) and detection of the possible presence of tracer gas in the low pressure steam downstream of the exchanger (10), characterized in that a predetermined amount of tracer gas, previously stored in a calibrated volume (24) under a predetermined pressure, higher than the pressure of the high pressure steam, is injected in a short time, comprised between 3 and 10 seconds, into the inlet pipe of the high pressure steam circuit (20, 14, 22) and the presence of the tracer gas is detected in the steam, directly at the output of the exchanger (10), after said injection has been carried out, and in that the sequence consisting of storing, injecting and determining the possible presence of pressure gas is repeated.

2. Process according to claim 1 for detection of leaks in an exchanger (10) for superheating steam, characterized in that a fraction of the superheated steam is condensed immediately at the output of the exchanger (10), the condensation water is degased and the possible presence of tracer gas in the uncondensable gases is detected.

3. Process according to claim 1 or 2, characterized in that a signal representative of the content of tracer gas in the low pressure steam taken at the output (18) of the exchanger (10) is time integrated after each injection.

4. Process according to claim 1, 2 or 3, characterized by a preliminary calibration making it possible to determine the size of the leaks, by injecting a predetermined amount (34) of the tracer gas into said lower pressure steam and determining the amount of tracer gas collected at the output (18) of the exchanger (10) after the injection.

5. Process according to any one of the preceding claims, characterized in that the tracer gas is forced into the exchanger (10) with an inert driving gas in a period lower than 10 seconds.

6. A device for detecting leaks in a heat exchanger (10) between two steam flows having different pressures, while the exchanger (10) is in operation, for carrying out the process according to claim 1, comprising means for injecting the tracer gas into the high pressure steam input (19) of exchanger (10) and means (64, 70, 72) for taking a fraction of the low pressure steam downstream (18) of exchanger (10) and conditioning the steam for extracting the possible tracer gas and detecting the presence thereof, characterized in that the means for injecting the tracer gas comprise means (44) for temporarily storing a predetermined amount of the tracer gas and means (52) for fast expulsion of said predetermined amount of tracer gas into said inlet of high pressure steam of the exchanger (10) with a driving gas, in that the means (64, 70, 72) for extracting a fraction of the low pressure stream downstream (18) of exchanger (10) are located immediately at the output (18) of the exchanger (10), and in that leak detection is carried out by means (74) for measuring the amount of collected tracer gas.

7. Device according to claim 6, characterized in that the means (74) for measuring the collected amount of tracer gas comprise a mass spectrometer (74) associated with a system for aspirating a fixed flow rate (78).

8. Device according to claim 7 for detecting leaks in a steam overheating exchanger (10), characterized in that the system for taking a fixed flow rate (78) is arranged for aspirating part of the uncondensable gases after steam condensation.

9. Device according to claim 6, 7 or 8, characterized in that it comprises a calibration unit having means (44a) for temporary storage of a predetermined amount of the tracer gas, lower than the predetermined amount of tracer gas which is forced for measurement, and means (52a, 38) for rapidly forcing said predetermined amount of tracer gas into the low pressure steam in the exchanger (10).

10. Device according to any one of claims 6—9, characterized in that the means which constitute it as well as the supplies (56, 58) of tracer gas and driving gas are carried by a vehicle and are provided with releasable means (36) for connection with the exchanger (10) to be tested.

FIG.1.

FIG.2.